# EUROPEAN PATENT SPECIFICATION

(11) **EP 1 480 913 B1**
(45) Date of publication and mention of the grant of the patent: **21.06.2006**
(21) Application number: 02700973.7
(22) Date of filing: 01.03.2002
(51) Int. Cl.: C02F 1/42, C02F 1/461, B01J 41/00, B01J 49/00

(54) **NITRATE REMOVAL**
ENTFERNUNG VON NITRAT
ELIMINATION DE NITRATES

(43) Date of publication of application: 01.12.2004
(73) Proprietor: Vattenfall AB (publ), 162 87 Stockholm (SE)
(72) Inventor: YAN, Jinying, S-162 46 Vällingby (SE); VELIN, Anna, S-196 31 Kungsängen (SE); WARLIN, Anders, S-163 40 Spanga (SE)
(74) Representative: Larsson, Kjell
(86) International application number: PCT/SE2002/000360
(87) International publication number: WO 2003/074430

(56) References cited:
- EP-A2- 0 291 330
- WO-A1-00/56666
- GB-A- 2 267 290
- US-A- 4 671 879
- US-A- 5 238 576

## Description

### Technical Field of the Invention

The present invention relates to a process for removal and destruction of dissolved nitrate from water containing the same. More specifically, it relates to an integrated process with nitrate selective ion exchange, electrochemical destruction of nitrate, and re-use of spent regenerant.

### Background Art

During recent decades, nitrate contamination in raw water sources have been increasing due to the intensive use of nitrogenous fertilizers, changes in land-use patterns (from pasture to arable), and the contamination of sewage and industrial effluents. It has been found that nitrate levels have been increasing in drinking water supplies in the European Economic Community, the United States, Canada, Africa, the Middle East, Australia, and New Zealand (Kappor and Viraraghavan, 1997). Because an increased nitrate uptake can link to several health hazards causing methaemolobinaemia or cancer risks due to nitrosamines or nitrosamides, limits have been set up to regulate the maximum nitrate levels in drinking water. In Europe, an EEC Directive on the quality of drinking water for human consumption specifies a maximum admissible concentration of 50 mg NO₃⁻/l, but a guide level of 25 mg NO₃⁻/l is recommended (European Community, 1980). The U.S. EPA establishes a maximum contaminant level (MCL) of 10 mg NO₃⁻-N/l corresponding to 44 mg NO₃⁻/l (Pontius, 1993). The Health and Welfare Canada has established a maximum acceptable concentration (MAC) of 10 mg NO₃⁻-N/l and the nitrite of 3.2 mg/l when nitrates and nitrites are measured separately in drinking water (Health and Welfare Canada, 1993).

Several technologies can be used for nitrate removal from waters. The chemical technologies include ion exchange and catalytic denitrification. The membrane technologies involve reverse osmosis, nanofiltration, electrodialysis and electrodeionization. Biological denitrification has also been applied. When comparing the various technologies in terms of effectiveness, ease of operation, reliability, cost and suitability for environmental regulation, ion exchange is found to be a highly competitive technology and is used in commercial large-scale applications, especially for drinking water treatment.

Conventional ion-exchange technology involves a process, in which the nitrate contained in water is exchanged with another anion that is already adsorbed on the strong basic ion-exchange resin. Also competing anions present in the water take part in this exchange and are adsorbed to the resin. This condition lowers the efficiency of nitrate removal from waters contaminated with e.g. sulphate.

After a period of operation, the exchange capacity of the resin is exhausted. The exhausted resin is then regenerated with a regeneration chemical. During the regeneration cycle, the nitrate is released from the resin and a waste stream is produced together with the regeneration chemical. The nitrate can be reduced to nitrogen, but the waste stream containing the regeneration chemical is still remaining. Disposal of the waste stream may lead to a significant waste disposal cost or regulatory complications as well as to loss of the regeneration chemical. The disposal of the waste solution is a big challenge for the application of the ion exchange technology. Attempts to recycle the regenerating solution have been made, but have failed because competitive anions are accumulated in the spent regenerant and the regeneration efficiency is not maintained.

The European patent application 291,330 discloses a process for treatment of ground-water containing nitrate, comprising the steps of contacting the water with an ion-exchange resin, regenerating the exhausted ion-exchange resin with a regenerant, and reconstituting the spent regenerant by subjecting it to electrolysis. In this process, however, chlorine gas may undesirably be evolved. In addition, sodium hypochlorite, which will destroy the ion-exchange resin, will be formed.

The British patent 1,432,020 discloses a process for recovery of spent regenerating solutions for re-use in an ion-exchange system. This is an extensive process aiming at recovering the different components of the spent regenerating solutions by precipitation and electrodialysis.

### Summary of the Invention

One object of the present invention is to provide an integrated process allowing efficient removal and destruction of nitrate from waters contaminated with other anions.

A second object of the present invention is to provide such a process where spent regenerant solution can be continuously re-used.

Another object of the present invention is to provide such a process which does not give rise to any waste streams.

Still another object of the present invention is to provide such a process where competing anions are not accumulated in the re-used regenerant.

A further object of the present invention is to provide such a process where the regeneration efficiency is maintained.

Other objects of the invention should be apparent to a person skilled in the art when reading the more detailed description of the invention as presented below.

These objects are achieved by a process for removal and destruction of dissolved nitrate from water containing the same, which comprises
- a removal step in the form of an anion-exchange operation, where nitrate is eliminated from said water in the form of a more concentrated solution thereof, said anion-exchange operation being nitrate selective;
- a destruction step, where said more concentrated nitrate solution is subjected to an electrolysis operation for nitrate destruction by electrochemical reduction thereof;
- a conditioning step, where solution resulting from the destruction step is adjusted to a ratio in equivalents of chloride to sulphate higher than about 6 by the addition of chloride ions so as to enable use of said solution as a regenerant in the anion-exchange operation while maintaining an operating capacity of said anion-exchange operation which is substantially unchanged from one anion-exchange operation to another; and
- a recycling step, where solution resulting from the conditioning step is used as a regenerant in the anion-exchange operation.

The use of a removal step with a nitrate selective ion-exchange operation makes it possible to remove nitrate ions also from waters contaminated with competing anions, without substantially lowering the efficiency of the removal.

The destruction step with an electrolysis operation where nitrate is reduced to nitrogen assures effective destruction of nitrate.

The conditioning step makes it possible to maintain the regenerating efficiency of the recycled regenerant by a sufficiently high chloride concentration to displace nitrate ions from the ion-exchange resin and thereby to maintain the operating capacity of the ion-exchange operation.

The fact that a minimum of competing anions are adsorbed to the ion-exchange resin, combined with efficient regeneration of the resin, means that less competing anions are accumulated in the spent regenerant.

The recycling step completes the process and enables an integrated process with complete re-use of spent regenerant and no waste streams.

For the sustainable operation of an ion-exchange system with continuous recycling of spent regenerant, three aspects must simultaneously be considered:
- the nitrate contained in the spent regenerant must be destructed as much as possible
- the accumulation of competitive anions in the spent regenerant must be discontinued in some way, and
- high regeneration efficiency for the ion-exchange bed must be maintained as the concentration of regeneration solution is changed with continued regeneration cycles.

### Brief Description of the Drawings

Figure 1 shows a flow diagram for a typical system configuration to perform the process of the present invention.
Figure 2 and 3 show results from Example 2 below.

### Detailed Description of Preferred Embodiments of the Invention

The integrated process comprises four steps: nitrate selective removal from water by ion exchange, electrochemical destruction of the nitrate in spent regenerant, conditioning of the spent regenerant, and recycling of the conditioned regenerant. According to the invention, preferably all, but at least a major part, of the spent regenerant is recycled.

The key points of the process are to keep mass balances for accumulated anions in a succession of repeated process cycles, and to maintain the regenerating and operating efficiencies throughout repeated cycles. When sulphate is present the mass balance for sulphate is achieved by a steady-state accumulation in spent regenerant.

The steady state is a dynamic phenomenon related to the re-use of spent regenerant in multiple operation and regeneration cycles. It depends on the properties of the ion-exchange resin, the concentration of anions in the raw water, and the conditions of operation and regeneration. If nitrate removal can be performed under such steady state conditions, a continuous process can be set up for multiple operating and regenerating cycles without the discharge of spent regenerant.

The efficiencies of operation and regeneration are maintained in two ways. In regeneration, the nitrate adsorbed in an operation cycle must be replaced by the regenerant as much as possible. Although both chloride and sulphate may theoretically be used as regenerants for an anion resin to displace nitrate, high concentration of sulphate in a regeneration solution gives a negative influence on regeneration efficiency. In operation, the removal of nitrate is achieved mainly by selective displacement using nitrate selective anion-exchange resins.

### Selective nitrate removal by ion-exchange

In the first step of the process, nitrate is removed from water by a selective anion-exchange resin. A nitrate selective resin has higher affinity for nitrate than for other major anions present in the water. The purposes of using a nitrate selective resin are to increase the operating capacity of the ion-exchange operation when the ratio of competing anions, e.g. sulphate, to nitrate is high in the water; to reduce the adsorption of other anions to the ion-exchange resin; and to decrease the accumulation of other anions in the regeneration solution.

Two commercial nitrate selective anion-exchange resins (IMAC HP555 from Rohm & Haas and A520E from Purolite) have been tested in their chloride forms for ion-exchange. The relative affinities of these types of resins for anions present in water are:

NO₃⁻ > SO₄²⁻ > Cl⁻ > HCO₃⁻ (1)

The relative affinities of a regular strong base anion-exchange resin for these anions are usually as follows:

SO₄ ²⁻ > NO₃⁻ > Cl⁻ > HCO₃⁻ (2)

Because the selective resins have a higher affinity for nitrate compared to other major anions present in nature waters, the adsorption of other anions becomes much less than to regular anion-exchange resins. The higher affinity of a resin for nitrate, the larger nitrate removal capacity the resin has.

When the nitrate removal capacity of the resin bed is exhausted in an operation cycle, the anions adsorbed together with nitrate in the operation cycle are replaced by chloride. During a regeneration cycle, co-current regeneration is carried out to recover the capacity.

Although it is impossible to totally separate nitrate from other anions in the ion-exchange operation cycle, the selective displacement using the nitrate selective resin makes the adsorption of other anions limited.

Carbonate, chloride and sulphate are major anions in most of nature waters. As a nitrate selective resin is used for the ion-exchange system and sodium chloride is used as the regenerant, sulphate is mainly concerned for the anion accumulation in spent regenerant according to the relative affinities of the resin for these anions (equation 1).

### Electrochemical destruction of nitrate

The nitrate reduction can be performed by any electrochemical method suitable for that purpose, but is preferably carried out in a two-compartment electrochemical cell equipped with cation-exchange membranes. A wide range of commercially available cation exchange membranes are suitable to incorporate in the cell and be used in the process. As cathode, graphite, platinum, platinised titanium, lead, nickel, nickel mesh, copper, or copper mesh electrodes have proved to be especially efficient.

The nitrate reduction on the cathode can be described as follows:

M + NO₃⁻_{*aq*} → (M)NO₃⁻_{*ads*} (3)

NO₃⁻_{*ads*} + H₂O + e⁻ → NO₂⁻_{*ads*} (4)

M + H₂O + e⁻ → M(H)_{*ads*} + OH⁻ (5)

2NO₂⁻_{*ads*} + 8M (H) _{*ads*} → N_{*2g*} + 4H₂O (6)

Catalytic hydrogenation could be a part of the reduction of the nitrite and/or nitrate adsorbed on nickel graphite or platinum cathodes. On lead and copper cathodes electronation/protonation are the main reactions of the nitrate reduction

NO₃⁻_{*aq*} → NO₂⁻_{*aq*} (7)

2NO₂⁻_{*aq*} + 8H⁺ + 2e⁻ → N₂ + H₂O (8)

The main side reactions are hydrogen evolution

H₂O + 2e⁻ → H₂ + OH⁻ (9)

and nitrite reduction to ammonia

NO₂⁻_{*aq*} + 8H⁺ + 6e⁻ → NH₃ (10)

The anolyte contains sulphuric acid. In the anodic compartment the main reaction is water electrolysis, oxygen evolution and proton generation:

2H₂O - 4e⁻→ O₂ + 4H⁺ (11)

Protons generated during the water oxidation are transferred to the cathodic compartment.

The main roles of the cation exchange membrane are to prevent re-oxidation of the intermediates and the products of the nitrate reduction process, to transfer protons generated on the anode from the anodic compartment to the cathodic compartment, and to avoid chlorine evolution on the anode, which would lead to the presence of active chlorine or to the production of hypochlorite (ClO⁻) or chlorate (ClO₃⁻) . These oxidative species can cause serious damage to the anion exchange resin.

### Conditioning of spent regenerant

In addition to discontinued accumulation of competing anions in spent regenerant, a high regeneration efficiency at such steady-state concentrations is required in order to have a low residual nitrate in treated water during succesive operation cycles. A high regeneration efficiency is maintained as for instance the sulphate concentration in the spent regenerant increases during the re-using cycles until a steady state is reached. It has been found that the regeneration efficiency is decreased as the sulphate concentration is relatively higher and the chloride concentration is relatively lower. However, the negative influence of sulphate on the regeneration can be reduced when a relatively higher concentration of chloride and/or a relatively higher ratio of chloride to sulphate is kept in the spent regeneration solution. A NaCl concentration higher than about 9 %wt (corresponding to a chloride concentration higher than about 5 %wt) and/or a ratio in equivalents of chloride to sulphate higher than about 6 in the spent regeneration solution is essential to keep a high efficiency of regeneration.

Moreover, a suitable regeneration level should also be considered. The regeneration level is defined as the weight of regenerant used to regenerate a certain volume of ion-exchange resin. The absolute regeneration level includes regenerant added in the conditioning step and regenerant re-used from the last cycle. The absolute regeneration level does not strongly affect the economy of the process because the actual regeneration level (only accounting for regenerant added in conditioning) is much lower than the absolute regeneration level. However, the regeneration level affects the operating capacity and the quality of treated water in the following cycle. An absolute regeneration level higher than about 350 g NaCl/l resin is recommended to keep a high efficiency of regeneration.

In addition, deionized or softened water should be used for conditioning of the regenerant and rinsing of regenerated resin to prevent from the precipitation of calcium sulphate and/or magnesium sulphate.

### Recycling of conditioned regenerant

After nitrate destruction and conditioning, the spent regenerant is re-used for regeneration of the anion exchange operation during another process cycle. Thus, a process which does not give rise to any waste streams is provided.

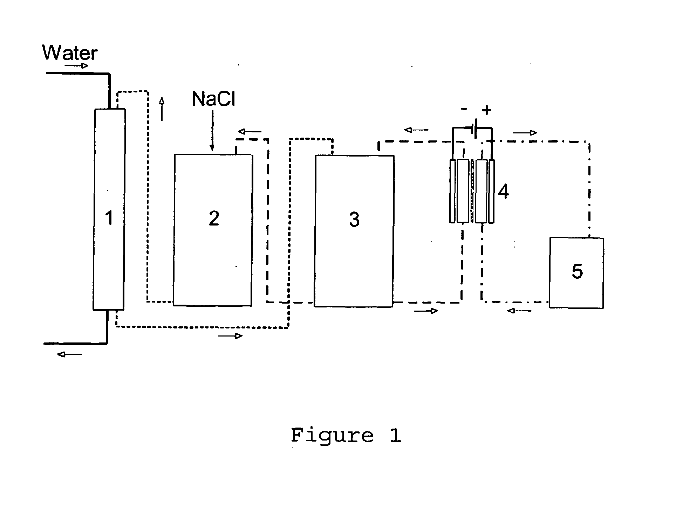

Figure 1 schematically shows one embodiment of an apparatus for performing the process according to the invention. The apparatus shown in the figure includes the following elements: an ion-exchange column 1, a regenerant tank 2, a spent regenerant tank 3, an electrochemical cell 4, and an anolyte tank 5.

Said apparatus works in the following way: Nitrate contaminated water passes through the ion-exchange column 1, loaded with chloride ions, where nitrate ions present in said water are adsorbed on the nitrate selective anion-exchange resin and are replaced by chloride ions. When the ion-exchange column 1 is exhausted, it is regenerated with a sodium chloride solution from the regenerant tank 2. Nitrate is removed and replaced by chloride ions.

The spent regenerant solution, containing nitrate, is collected in the spent regenerant tank 3. Spent regenerant from the spent regenerant tank 3 and anolyte from the anolyte tank 5 are circulated through the electrochemical cell 4, where nitrate is reduced to nitrogen gas.

The spent regenerant is then transferred to the regenerant tank 2, where it is conditioned by addition of sodium chloride.

The conditioned regenerant in the regenerant tank 2 is re-used for regeneration of the ion-exchange column 1 in another process cycle.

In another embodiment, the apparatus comprises multiple ion-exchange columns to allow use of one column for nitrate removal when another is being regenerated.

### Examples

A nitrate removal process is demonstrated in the following examples. The process is an integrated process with nitrate removal by nitrate selective ion-exchange, destruction of nitrate in the spent regenerant in an electrochemical cell, and the full re-use of the regenerant by hindering the accumulation of sulphate and conditioning the concentration of sodium chloride in the spent regeneration solution.

A synthetic waste water containing 100 mg/l of nitrate, 500 mg/l of sulphate and 160 mg/l of chloride was used as raw water. The concentration of the synthetic water represented a relatively harsh situation compared to natural waters, especially on the ratio of nitrate to sulphate. During operation, the synthetic water was treated by passing it through an ion-exchange column (Ø 29 mm) with 20 g of nitrate selective resin (IMAC HP555 or A520E). The operation flow rate was usually 20-25 bed volumes/h (BV/h).

The nitrate concentration in the effluent was controlled to be less than 40 mg NO₃⁻/l, which was taken as the end point of an operation cycle. As the nitrate concentration in effluent reached 40 mg NO₃⁻/l, the operation cycle was stopped, a regenerating cycle was then started using NaCl solution. Meanwhile, the spent regenerant was collected for electrolysis, conditioning and re-use in the next regeneration cycle.

All experiments were carried out with commercially available ElectroMP and ElectroSyn cells equipped with Nafion 324 or Nafion 350 type cation exchange membranes. A wide range of commercially available cation exchange membranes are suitable to incorporate in the cell and be used in the process. The ElectroMP cell has a minimum geometrical surface area of 100 cm². The minimum surface area in the EletroSyn cell is 400 cm² for each electrode. PVDF or PP frames and EPDM gaskets (O-rings) were incorporated in the cell for proper sealing. A PE turbulence promoter provided uniform fluid distribution and good mass transfer conditions. The operation mode for all experiments was batch mode.

As cathode, a graphite electrode was used in such a way that solid graphite acted as current feeder which was pressed/glued to graphite felt. The catholyte compartment therefore was packed; the distance between the membrane and the cathode was reduced to 2 mm from the original 9 mm gap.

The electrolytes of the anodic and cathodic chambers had a volume of 2 litres in the ElectroMP cell. The anolyte was 0.9 M of sulphuric acid. The acid concentration remained stable after several cycles of electrolysis. The anolyte level was maintained the same; deionized water was added to the anolyte, as a part of the water had been electrolysed.

The pressure on the cell was maintained at 0.2 bar, which provided a constant flow in each compartment. The temperature of the electrolytes was below 40°C. The process parameters are summarised in Table 1.

**Table 1 The process parameters of the electrochemical nitrate reduction**

| | |
|---|---|
| Active electrode surface | 200-400 cm² |
| Current density | 1 kA/m² |
| Electrode gap | 2 mm cathode side; |
| | 9 mm anode side |
| Temperature | 25-34 °C |
| Superficial velocity | 0.5 m/s |
| Membrane | Nafion* 324, 350 |

The operation-regeneration-operation cycles were continuously run without discharge of spent regenerant. A steady-state concentration of sulphate was reached in the spent regeneration solution after the initial cycles. Because of the complete re-use of spent regenerant, a high regeneration level and co-current regeneration were used for this process.

The efficiency of the continuous process for nitrate removal in such a succession of repeated cycles is illustrated in the following examples.

### Example 1

The effluent quality of the ion-exchange system was good in continuous operation cycles. As shown in Table 2 and Table 3, the average concentrations of residual nitrate in the effluent were below 15 mg NO₃⁻/l when the control limit was set to less than 40 mg NO₃⁻/l. The concentrations of other anions in the effluent were close to those in the raw water. Nitrate was selectively removed in the operation cycles.

A comparison between an early cycle and a later cycle is also given in Table 2 and Table 3. Although the early operation cycle (cycle 2) was regenerated by a regenerant containing a relatively lower concentration of sulphate and the later operation cycle (cycle 9) was regenerated under a high (steady-state) concentration of sulphate, the effluent quality did not show any significant difference between these operation cycles. The efficiency of nitrate removal in operation was maintained throughout the operation cycles.

**Table 2 The effluent quality of the ion-exchange column using the nitrate selective resin IMAC HP555**

| Cycle 2 | | | | | Cycle 9 | | | | |
|---|---|---|---|---|---|---|---|---|---|
| Effluent (BV) | NO₃⁻ (mg/l | SO₄²⁻ (mg/l) | Cl⁻ (mg/l) | pH | Effluent (BV) | NO₃⁻ (mg/l) | SO₄²⁻ (mg/l | Cl⁻ (mg/l) | pH |
| 12 | 10 | 4 | 584 | 6.27 | 11 | 6 | 0 | 537 | 6.73 |
| 30 | 8 | 26 | 563 | 6.19 | 29 | 7 | 16.2 | 558 | 6.74 |
| 48 | 11 | 158 | 470 | 6.51 | 48 | 7 | 474 | 129 | 6.75 |
| 66 | 6 | 377 | 311 | 6.19 | 67 | 7 | 358 | 307 | 6.24 |
| 84 | 6 | 501 | 213 | 6.14 | 86 | 6 | 441 | 192 | 6.42 |
| 104 | 5 | 547 | 181 | 6.21 | 104 | 7 | 526 | 184 | 6.34 |
| 122 | 6 | 557 | 171 | 6.21 | 125 | 7 | 538 | 177 | 6.40 |
| 142 | 7 | 555 | 175 | 6.25 | 144 | 8 | 567 | 183 | 6.41 |
| 163 | 11 | 557 | 173 | 6.32 | 163 | 10 | 536 | 172 | 6.48 |
| 172 | 14 | 558 | 174 | 6.27 | 173 | 11 | 534 | 173 | 7.19 |
| 181 | 17 | 551 | 172 | 6.24 | 182 | 14 | 561 | 179 | 6.44 |
| 190 | 21 | 545 | 174 | 6.18 | 191 | 18 | 567 | 180 | 6.38 |
| 199 | 28 | 542 | 170 | 6.23 | 200 | 19 | 534 | 169 | 6.35 |
| 209 | 34 | 538 | 170 | 6.18 | 209 | 25 | 527 | 167 | 6.36 |
| 218 | 39 | 537 | 174 | 6.19 | 218 | 31 | 529 | 167 | 6.37 |
| Average | 15 | 437 | 258 | 6.24 | Average | 12 | 447 | 232 | 6.51 |

| | | | | | | | | | |
|---|---|---|---|---|---|---|---|---|---|
| Notes: Cycle 2 is an early operation cycle that has been regenerated by re-use of spent regenerant containing a relatively lower concentration of sulphate. Cycle 9 is a later operation cycle that has been regenerated using spent regenerant containing the steady-state concentration of sulphate. | | | | | | | | | |

**Table 3 The effluent quality of the ion-exchange column using the nitrate selective resin A520E**

| Cycle 2 | | | | | Cycle 9 | | | | |
|---|---|---|---|---|---|---|---|---|---|
| Effluent (BV) | NO₃⁻ (mg/l) | SO₄²⁻ (mg/l) | Cl⁻ (mg/l) | pH | Effluent (BV) | NO₃⁻ (mg/l) | SO₄²⁻ (mg/l) | Cl⁻ (mg/l) | pH |
| 11 | 9 | 0 | 537 | 6.80 | 10 | 10 | 6 | 549 | 6.81 |
| 28 | 9 | 12 | 566 | 6.49 | 28 | 10 | 14 | 565 | 6.54 |
| 45 | 8 | 89 | 513 | 6.36 | 46 | 10 | 118 | 488 | 6.22 |
| 63 | 8 | 325 | 338 | 6.02 | 64 | 15 | 609 | 598 | 6.12 |
| 80 | 8 | 470 | 221 | 6.12 | 81 | 8 | 477 | 230 | 6.00 |
| 98 | 7 | 521 | 189 | 5.98 | 98 | 7 | 534 | 192 | 6.06 |
| 117 | 7 | 530 | 174 | 5.71 | 115 | 7 | 554 | 185 | 5.66 |
| 134 | 7 | 529 | 172 | 6.07 | 132 | 7 | 554 | 180 | 5.57 |
| 152 | 10 | 538 | 178 | 5.54 | 150 | 8 | 561 | 180 | 5.55 |
| 162 | 8 | 539 | 175 | 5.60 | 158 | | 550 | 178 | 5.54 |
| 170 | 9 | 533 | 177 | 5.61 | 168 | 10 | 564 | 179 | 5.57 |
| 180 | 10 | 538 | 175 | 5.61 | 177 | 11 | 550 | 173 | 5.56 |
| 188 | 12 | 531 | 174 | 5.55 | 186 | 8 | 552 | 177 | 5.66 |
| 197 | 14 | 529 | 174 | 5.58 | 195 | 10 | 557 | 178 | 5.67 |
| 206 | 17 | 532 | 173 | 5.70 | 203 | 13 | 545 | 175 | 5.50 |
| 214 | 20 | 530 | 171 | 5.78 | 212 | 18 | 554 | 177 | 5.53 |
| 223 | 26 | 567 | 181 | 5.79 | 221 | 22 | 547 | 175 | 5.50 |
| 232 | 28 | 523 | 168 | 5.90 | 230 | 25 | 545 | 172 | 5.81 |
| 240 | 34 | 503 | 163 | 5.61 | 238 | 31 | 539 | 172 | 5.58 |
| 249 | 40 | 519 | 165 | 5.68 | 247 | 46 | 533 | 168 | 5.66 |
| Average | 14 | 443 | 239 | 5.88 | Average | 14 | 473 | 255 | 5.81 |

| | | | | | | | | | |
|---|---|---|---|---|---|---|---|---|---|
| Notes: Cycle 2 is an early operation cycle that has been regenerated by re-use of spent regenerant containing a relatively lower concentration of sulphate. Cycle 9 is a later operation cycle that has been regenerated using spent regenerant containing a steady-state concentration of sulphate. | | | | | | | | | |

### Example 2

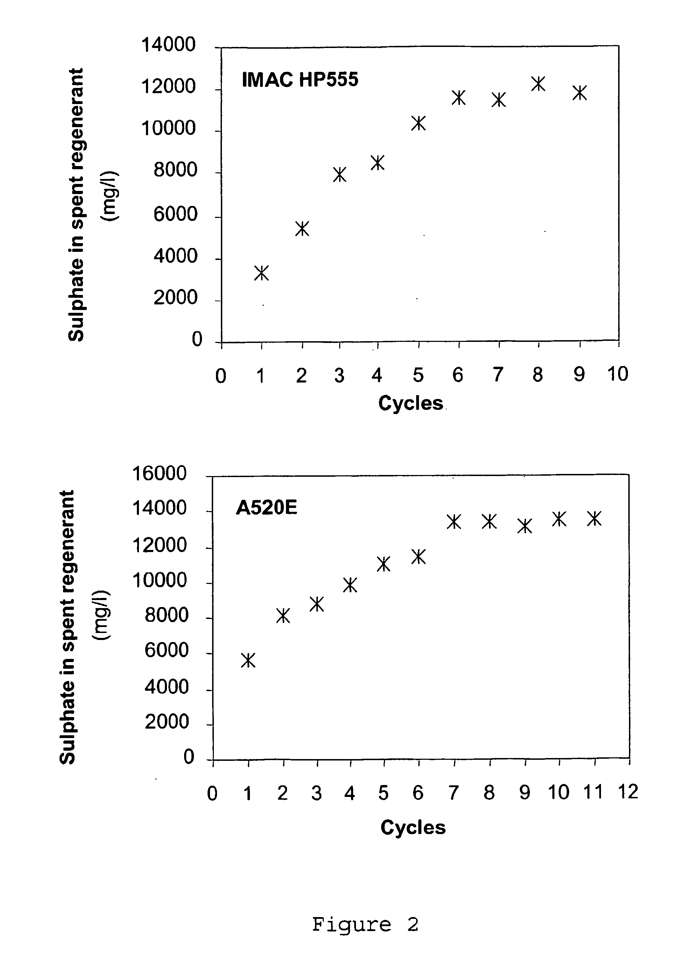

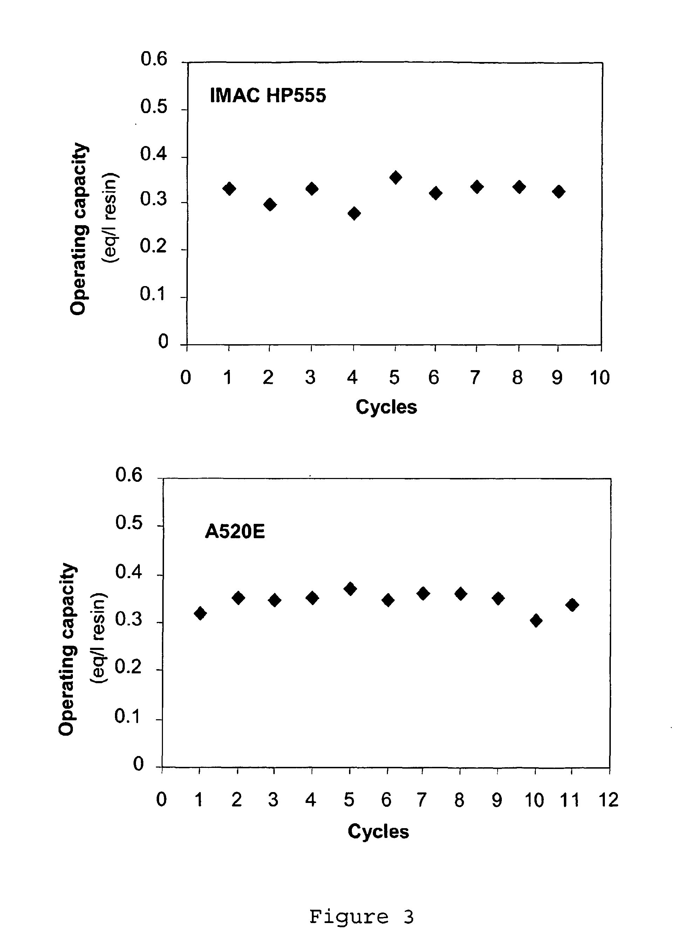

Spent regenerant was continuously re-used in a regeneration-operation-regeneration chain of repeated cycles. Two nitrate selective resins, IMAC HP555 (Rohm & Haas) and A520E (Purolite), were tested for their regeneration and operation efficiencies, and for the accumulation of sulphate in spent regenerant. As shown in Figure 2, the accumulation of sulphate in the spent regeneration solutions was terminated after certain regeneration-operation-regeneration cycles. The concentration of sulphate in the spent regeneration solutions reached a steady state without discharge of spent regenerant. This means that a nitrate removal process can be performed with a succession of repeated cycles as the regeneration efficiency can be maintained under steady-state conditions. Figure 3 shows that the operation capacities of the ion-exchange columns were very stable during the regeneration-operation-regeneration cycles, also when the sulphate accumulation in spent regenerant had reached steady state. More detailed information on the regeneration parameters and operation features is given in Table 4 (for IMAC HP555) and Table 5 (for Purolite A520E). The results indicate that the quality of the effluents was not changed during the repeated process cycles.

**Table 4 The results of the column tests using the nitrate selective resin IMAC HP555**

| Cycle | Regeneration | | Operation (average in effluent) | | | |
|---|---|---|---|---|---|---|
| | NaCl (%) | Level (g NaCl/l resin) | NO₃⁻ (mg/l) | SO₄²⁻ (mg/1) | Cl⁻ (mg/l) | pH |
| 1 | 6.4 | 459 | 16 | 400 | 144 | 6.88 |
| 2 | 8.9 | 482 | 12 | 415 | 276 | 6.24 |
| 3 | 7.4 | 476 | 13 | 412 | 282 | 6.56 |
| 4 | 9.0 | .486 | 13 | 383 | 287 | 6.50 |
| 5 | 9.0 | 486 | 9 | 422 | 253 | 6.49 |
| 6 | 9.0 | 486 | 13 | 427 | 250 | 6.57 |
| 7 | 9.0 | 486 | 13 | 425 | 245 | 6.48 |
| 8 | 9.0 | 486 | 11 | 432 | 248 | 6.52 |
| 9 | 9.0 | 486 | 14 | 452 | 228 | 6.57 |

**Table 5 The results of the column tests using the nitrate selective resin A520E**

| Cycle | Regeneration | | Operation (average in effluent) | | | |
|---|---|---|---|---|---|---|
| | NaCl (%) | Level (g NaCl/l resin) | NO₃⁻ (mg/l) | SO₄²⁻ (mg/l) | Cl⁻ (mg/l) | pH |
| 1 | 8.9 | 458 | 16 | 447 | 248 | 5.78 |
| 2 | 9.0 | 462 | 14 | 443 | 239 | 5.96 |
| 3 | 9.0 | 462 | 14 | 439 | 238 | 6.05 |
| 4 | 9.0 | 462 | 12 | 441 | 244 | 5.95 |
| 5 | 9.0 | 462 | 12 | 448 | 248 | 6.06 |
| 6 | 9.0 | 462 | 13 | 459 | 239 | 5.99 |
| 7 | 9.0 | 462 | 11 | 430 | 230 | 6.03 |
| 8 | 9.0 | 462 | 11 | 470 | 240 | 5.85 |
| 9 | 9.0 | 462 | 14 | 473 | 255 | 5.86 |
| 10 | 9.0 | 462 | 15 | 440 | 253 | 5.88 |
| 11 | 9.0 | 462 | 16 | 432 | 232 | 6.11 |

### Example 3

The nitrate contained in spent regeneration solution was destructed by an electrochemical reduction process before conditioning. The catholyte was composed of sodium chloride, sodium nitrate and sodium sulphate. The initial ratios of the three main components of the catholyte were varied since the concentration of the anions changes after several cycles of regeneration of the nitrate selective anion exchange resin. The sulphate concentration was varied between 32 and 134 mmol/l. Selective nitrate reduction and water electrolysis were the two main reactions. The conditions of the electrolysis were set to reduce the nitrate selectively. Over 99 % of the nitrate in the catholyte was reduced.

Sulphuric acid (0.8-0.9 M) was used as anolyte and water electrolysis with oxygen evolution was the main reaction in the anodic compartment. The protons generated from the electroysis were transferred into the cathodic compartment.

The pH of the catholyte and the anolyte remained stable after several cycles of nitrate removal and reduction. Volumetric changes in the two compartments resulted in an increased level in the catholyte and a decreased in the anolyte. The anolyte level was adjusted by water addition after each cycle of the reduction.

In the anodic compartment the electrolyte was not changed. In a total of over the 150 hours of operation there was no need for acid addition to the sulphuric acid anolyte. In the cathodic compartment the same sodium chloride solution was used.

The parameters and results are shown in Table 6-9.

**Table 6 Results obtained from the electrochemical reduction of nitrate in an effluent in which the initial sulphate concentration was lower than the nitrate concentration. The conversion rate for nitrate was over 91 % and the current efficiency was 46 %.**

| | | | Catholyte | | | | Anolyte | |
|---|---|---|---|---|---|---|---|---|
| Time | Current | Tension | Volume | SO₄²⁻ | NO₃⁻ | NO₃⁻ | Volume | H⁺ |
| (h) | (A) | (V) | (1) | (mmol/l) | (mmol/l) | (mg/l) | (1) | (mol/l) |
| 0 | 20 | 4.40 | 2.00 | 32.03 | 86.44 | 5360 | 2.00 | 0.80 |
| 1.0 | 20 | 4.35 | 2.00 | 31.89 | 68.11 | 4223 | 1.95 | |
| 2.0 | 20 | 4.40 | 2.10 | 31.84 | 31.76 | 1969 | 1.85 | |
| 3.0 | 20 | 4.50 | 2.10 | 31.41 | 7.70 | 478 | 1.80 | |
| 4.0 | 20 | 4.60 | 2.20 | 30.66 | 1.43 | 88 | 1.75 | 0.91 |

**Table 7 Results obtained from the electrochemical reduction of nitrate in an effluent in which the initial sulphate and nitrate concentrations were in the same range. The conversion rate for nitrate was over 92 % and the current efficiency was 84 %.**

| | | | Catholyte | | | | Anolyte | |
|---|---|---|---|---|---|---|---|---|
| Time | Current | Tension | Volume | SO₄²⁻ | NO₃⁻ | NO₃⁻ | Volume | H⁺ |
| (h) | (A) | (V) | (1) | (mmol/l) | (mmol/l) | (mg/l) | (1) | (mol/l) |
| 0.0 | 20 | 4.20 | 2.20 | 50.2 | 53.1 | 3296 | 2.00 | 0.80 |
| 1.0 | 20 | 4.00 | 2.20 | 49.1 | 5.2 | 310 | 1.95 | |
| 2.0 | 20 | 4.00 | 2.20 | 49.2 | 0.2 | 10 | 1.85 | |
| 2.5 | | 4.00 | 2.20 | 48.8 | 0.1 | 7 | | |
| 3.0 | 20 | 4.10 | 2.25 | 47.9 | 0.3 | 19 | 1.85 | |
| 3.5 | | 4.20 | 2.25 | 48.1 | 0.0 | 0 | 1.80 | |
| 4.0 | 20 | 4.20 | 2.30 | 48.0 | 0.0 | 0 | 1.78 | 0.90 |

**Table 8 Results obtained from the electrochemical reduction of nitrate in an effluent in which the initial sulphate concentration was higher than the nitrate concentration. The conversion rate for nitrate was over 80 % and the current efficiency was over 61 %.**

| | | | Catholyte | | | | Anolyte | |
|---|---|---|---|---|---|---|---|---|
| Time | Current | Tension | Volume | SO₄²⁻ | NO₃⁻ | NO₃⁻ | Volume | H⁺ |
| (h) | (A) | (V) | (1) | (mmol/l) | (mmol/l) | (mg/l) | (1) | (mol/l) |
| 0.0 | 20 | 4.34 | 2.20 | 80.5 | 42.4 | 2627 | 2.00 | 0.79 |
| 1.0 | 20 | 4.40 | 2.20 | 76.1 | 9.1 | 567 | 1.95 | |
| 2.0 | 20 | 4.50 | 2.30 | 75.4 | 0.5 | 32 | 1.85 | 0.83 |
| | | | | | | | | |
| 0.0 | 20 | 4.40 | 2.20 | 96.5 | 42.0 | 2601 | 1.95 | 0.80 |
| 1.0 | 20 | 4.40 | 2.20 | 94.0 | 11.2 | 696 | 1.90 | |
| 2.0 | 20 | 4.60 | 2.30 | 93.5 | 0.9 | 53 | 1.85 | 0.84 |

**Table 9 Results obtained from the electrochemical reduction of nitrate in an effluent in which the initial sulphate concentration was close to the highest concentration that could be obtained with the nitrate selective ion exchange resin after several cycles of regeneration. The conversion rate for nitrate was close to 90% and the current efficiency was over 52 %.**

| | | | Catholyte | | | | Anolyte | |
|---|---|---|---|---|---|---|---|---|
| Time | Current | Tension | Volume | SO₄²⁻ | NO₃⁻ | NO₃⁻ | Volume | H⁺ |
| (h) | (A) | (V) | (1) | (mmol/l) | (mmol/l) | (mg/l) | (1) | (mol/l) |
| 0.0 | 20 | 4.30 | 2.00 | 134.4 | 31.0 | 1924 | 2.00 | 0.82 |
| 1.0 | 20 | | 2.00 | 129.5 | 3.3 | 206 | 1.95 | |
| 2.0 | 20 | | 2.10 | 129.4 | 0.1 | 8 | 1.85 | |
| 3.0 | 20 | | 2.10 | 129.3 | 0.1 | 6 | 1.80 | |
| 4.0 | 20 | 4.57 | 2.20 | 129.0 | 0.0 | <5 | 1.75 | 0.88 |

As shown by the results, the nitrate reduction was successfully carried out in an electrolyte containing sulphate and chloride in high concentrations. The current efficiency of the nitrate reduction depends on the initial nitrate concentration and on the conversion rate. The reduction process is more efficient in solutions which are more concentrated on nitrate. The selectivity of the nitrate reduction was not effected by the increasing sulphate concentration. Increasing initial nitrate/sulphate ratio resulted in an increase in the nitrate reduction efficiency as indicated in Table 10.

**Table 10 The current efficiency of the nitrate reduction depends on the ratio of nitrate to sulphate**

| Ratio of NO₃⁻/SO₄²⁻ | Current efficiency (%) |
|---|---|
| > 1 | - 46 |
| < 1 | > 52 |

### Example 4

As shown in Table 11, the ratio of chloride to sulphate in the regeneration solution played an important role for the regeneration efficiency. A high ratio of chloride to sulphate should be kept in a spent regeneration solution in order to maintain a good regeneration efficiency and to decrease residual nitrate in effluent in the following operation cycles.

**Table 11 Comparison of the regeneration efficiencies for IMAC HP555 with different ratios of chloride to sulphate in the regenerant**

| Regeneration | | | Operation | | | | |
|---|---|---|---|---|---|---|---|
| NaCl | SO₄²⁻ | Ratio | Capacity | NO₃⁻ | SO₄²⁻ | Cl⁻ | pH |
| | | | | in effluent | | | |
| (meq/l) | (meq/l) | (Cl⁻/SO₄²⁻) | (eq/l resin) | (mg/l) | (mg/l) | (mg/l) | |
| 769 | 770 | 1.00 | 0.267 | 20 | 396 | 264 | 6.37 |
| 1149 | 390 | 2.95 | 0.304 | 18 | 438 | 247 | 6.07 |
| 1538 | 390 | 3.95 | 0.319 | 15 | 417 | 244 | 6.21 |
| 1538 | 245 | 6.29 | 0.332 | 12 | 442 | 238 | 6.55 |

The choice of a suitable end point for controlling the ion-exchange operation can improve the separation of nitrate from sulphate, by which the adsorption of sulphate should be displaced as much as possible in an operation cycle. As shown in Table 12, the release of sulphate and the operation capacities were obviously increased as the end point (EP) of operation was changed from 20 mg NO₃⁻/l to 40 mg NO₃⁻/l for the residual nitrate in effluent. Meanwhile, there were little changes in the average nitrate concentrations in effluent. Because relatively larger amounts of sulphate were released into the treated water near the end of the operation cycle, choosing a relatively higher end point as controlling limit for residual nitrate could reduce the steady-state concentration of sulphate in spent regenerant.

**Table 12 The inflence of the end point (EP) of operation on mass balance (IMAC HP555)**

| Cycle | Capacity (eq/L resin) | | Average NO₃⁻ in effluent (mg/l) | | Average SO₄²⁻ in effluent (mg/l) | |
|---|---|---|---|---|---|---|
| | EP=20 ppm | EP=40 ppm | EP=20 ppm | EP=40 ppm | EP=20 ppm | EP=40 ppm |
| 1 | 0.289 | 0.331 | 12 | 16 | 369 | 400 |
| 2 | 0.271 | 0.300 | 9 | 12 | 396 | 415 |
| 3 | 0.297 | 0.332 | 10 | 13 | 394 | 412 |
| 4 | 0.260 | 0.278 | 10 | 13 | 368 | 383 |
| 5 | 0.331 | 0.353 | 6 | 9 | 410 | 422 |
| 6 | 0.282 | 0.323 | 8 | 13 | 398 | 427 |
| 7 | 0.305 | 0.336 | 9 | 13 | 406 | 425 |
| 8 | 0.305 | 0.337 | 9 | 11 | 418 | 432 |
| 9 | 0.296 | 0.327 | 10 | 14 | 435 | 452 |

## Claims

1. A process for removal and destruction of dissolved nitrate from water containing the same, which comprises
- a removal step in the form of an anion-exchange operation, where nitrate is eliminated from said water in the form of a more concentrated solution thereof, said anion-exchange operation being nitrate selective;
- a destruction step, where said more concentrated nitrate solution is subjected to an electrolysis operation for nitrate destruction by electrochemical reduction thereof;
- a conditioning step, where solution resulting from the destruction step is adjusted to a ratio in equivalents of chloride to sulphate higher than about 6 by the addition of chloride ions so as to enable use of said solution as a regenerant in the anion-exchange operation while maintaining an operating capacity of said anion-exchange operation which is substantially unchanged from one anion-exchange operation to another; and
- a recycling step, where solution resulting from the conditioning step is used as a regenerant in the anion-exchange operation.

2. A process according to claim 1, wherein the anion-exchange operation is selective to nitrate, sulphate and chloride in said specific decreasing order.

3. A process according to any one of the preceding claims, wherein the electrolysis operation is performed in a two-compartment electrochemical cell.

4. A process according to claim 3, wherein the two-compartment electrochemical cell is equipped with cation-exchange membranes.

5. A process according to any one of the preceding claims, wherein, in the conditioning step, said solution resulting from the destruction step is adjusted by the addition of chloride ions so that the variability of the operation capacity of said anion-exchange operation is less than 10 %.

6. A process according to any one of the preceding claims, wherein, in the conditioning step, said solution chloride concentration higher than about 5 %wt.

7. A process according to any one of the preceding claims, wherein, in the conditioning step, said solution resulting from the destruction step is adjusted by the addition of chloride ions corresponding to a regeneration level higher than about 350 g NaCl/l ion-exchange resin.

8. A process according to any one of the preceding claims, wherein all of the solution from the removal step is passed to the destruction step.

9. A process according to any one of the preceding claims, wherein all of the solution resulting from the destruction step is conditioned and passed to the recycling step.

10. A process according to any one of the preceding claims, which is performed continuously for a complete re-use of regenerant.

## Patentansprüche

1. Verfahren zur Entfernung und zur Zerstörung von aufgelöstem Nitrat aus Wasser, welches dieses enthält, umfassend
- einen Entfernungsschritt in der Form eines Anionenaustauschverfahrens wobei das Nitrat in Form einer konzentrierteren Lösung des Nitrats aus dem Wasser entfernt und wobei das Anionenaustauschverfahren nitratselektiv ist;
- einen Zerstörungsschritt, wobei die konzentriertere Nitratlösung einer Elektrolyse zur Zerstörung des Nitrats durch eine electrochemische Reduktion des Nitrats un terworfen wird;
- einen Kondiotionieschritt, wobei die aus dem Zerstörungsschritt resultierende Lösung auf ein Verhältnis in Äquivalenten von Chlorid zu Sulfat auf mehr als ungefähr 6 durch Zugabe von Chloridionen eingestellt wird, um so die Verwendung der Lösung als ein Regenerat bei dem Anionenaustauschveffahren zu ermöglichen, während ein Arbeitsbereich des Anionenaustauschverfahrens beibehalten wird, welcher im Wesentlichen zwischen einem Anionenaustauschverfaheren zu einem weiteren unverändert bleibt; und
- einen Recyclingschritt, wobei die aus dem Konditionierschritt resultlerende Lösung als ein Regenerat bei dem Anionenaustauschverfahren verwendet wird.

2. Verfahren nach Anspruch 1, wobei das Anionenaustauschverfahren gegenüber Nitrat, Sulfat und Chlorid in der spezifischen abnehmenden Reihenfolge selektiv ist.

3. Verfahren nach einem der vorangehenden Ansprüche, die EleKtrolyse in einer elektrochemischen Zelle mit zwei Kammern durchgeführt wird.

4. Verfahren nach Anspruch 3, wobei die elektrochemische Zelle mit zwei Kammern mit Kationenaustauschmembranen ausgestattet ist.

5. Verfahren nach einem der vorangehenden Anspruche, wobei während des Konditionierschrittes die aus dem Zerstörungsschritt resultierende Lösung durch die Zugabe von Chloridionen engestellt wird, so dass die Variabilität bzw. Schwankung des Arbeitsbereichs des Anionenaustauschverfahrens weniger als 10 % beträgt

6. Verfahren nach einem der vorangehenden Anspruche, wobei die aus dem Zerstörungsschritt resultierende Lösung in dem Konditionierschritt auf eine Chloridkonzentration von mehr als ungefähr 5 Gew.-% eingestellt wird.

7. Verfahren nach einem der vorangehenden Ansprüche, wobei die aus dem Zerstörungsschritt resultierende Lösung in dem Konditionierschritt durch Zugabe von Chloridionen eingestellt wird, entsprechend einem Regenerationslevel von mehr als etwa 350 g NaCl/l Anjionenaustauscharz.

8. Verfahren nach einem der vorangehenden Anspruche, wobei die Lösung aus dem Entferunungsschritt zu dem Zerstörungsschritt geleitet wird.

9. Verfahren nach einem der vorangehenden Ansprache, wobei die ganze Lösung aus dem Zerstörungsschritt konditioniert und zu dem Recyclingschritt geführt wird.

10. Verfahren nach einem der vorangehenden Ansprüche, wobei das Verfahren für eine vollständige Wiederverwendung des Regenerats kontinuierlich durchgeführt wird.

## Revendications

1. Procédé pour l'élimination et la destruction du nitrate dissous de l'eau le contenant, qui comprend
- une étape d'élimination sous la forme d'une opération d'échange d'anions, où le nitrate est éliminé de ladite eau sous la forme d'une solution plus concentrée de celui-ci, ladite opération d'échange d'anions étant sélective du nitrate ;
- une étape de destruction, où ladite solution de nitrate plus concentrée est soumise à une opération d'électrolyse pour la destruction du nitrate par réduction électrochimique de celui-ci ;
- une étape de conditionnement, où la solution résultant de l'étape de destruction est ajustée à un rapport en équivalents de chlorure au sulfate supérieur à environ 6 par l'addition d'ions chlorure de manière à permettre l'utilisation de ladite solution comme régénérateur dans l'opération d'échange d'anions tout en maintenant une capacité d'opération de ladite opération d'échange d'anions qui soit essentiellement inchangée d'une opération d'échange d'anions à l'autre ; et
- une étape de recyclage, où la solution résultant de l'étape de conditionnement est utilisée comme régénérateur dans l'opération d'échange d'anions.

2. Procédé selon la revendication 1, dans lequel l'opération d'échange d'anions est sélective du nitrate, du sulfate et du chlorure dans ledit ordre décroissant spécifique.

3. Procédé selon l'une quelconque des revendications précédentes, dans lequel l'opération d'électrolyse est réalisée dans une cellule électrochimique à deux compartiments.

4. Procédé selon la revendication 3, dans lequel la cellule électrochimique à deux compartiments est équipée de membranes d'échange de cations.

5. Procédé selon l'une quelconque des revendications précédentes, dans lequel, dans l'étape de conditionnement, ladite solution résultant de l'étape de destruction est ajustée par l'addition d'ions chlorure de sorte que la variabilité de la capacité d'opération de ladite opération d'échange d'anions soit de moins de 10 %.

6. Procédé selon l'une quelconque des revendications précédentes, dans lequel, dans l'étape de conditionnement, ladite solution résultant de l'étape de destruction est ajustée à une concentration de chlorure supérieure à environ 5 % en poids.

7. Procédé selon l'une quelconque des revendications précédentes, dans lequel, dans l'étape de conditionnement, ladite solution résultant de l'étape de destruction est ajustée par l'addition d'ions chlorure correspondant à un niveau de régénération supérieur à environ 350 g NaCl/l de résine d'échange d'ions.

8. Procédé selon l'une quelconque des revendications précédentes, dans lequel l'ensemble de la solution de l'étape d'élimination est passé à l'étape de destruction.

9. Procédé selon l'une quelconque des revendications précédentes, dans lequel l'ensemble de la solution résultant de l'étape de destruction est conditionné et passé à l'étape de recyclage.

10. Procédé selon l'une quelconque des revendications précédentes, qui est mis en oeuvre en continu pour une réutilisation complète du régénérateur.
